(19) Europäisches Patentamt
European Patent Office
Office européen des brevets

(11) **EP 4 785 821 A1**

(12) **EUROPEAN PATENT APPLICATION**
published in accordance with Art. 153(4) EPC

(43) Date of publication:
**05.08.2026 Bulletin 2026/32**

(21) Application number: **24885289.9**

(22) Date of filing: **09.09.2024**

(51) International Patent Classification (IPC):
**A43D 1/02** (2006.01)     **G06T 7/50** (2017.01)
**G06T 17/00** (2006.01)

(52) Cooperative Patent Classification (CPC):
**G06T 7/50; A43D 1/02; G06T 17/00;**
G06T 2207/10028; G06T 2207/30196

(86) International application number:
**PCT/JP2024/032160**

(87) International publication number:
**WO 2025/094512 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 JP 2023188822**

(71) Applicant: **ASICS Corporation**
**Kobe-shi, Hyogo 650-0021 (JP)**

(72) Inventors:
• **TSUTSUI, Masayuki**
**Kobe-shi, Hyogo 650-0021 (JP)**
• **NAKAYA, Mai**
**Kobe-shi, Hyogo 650-0021 (JP)**
• **KUSUMI, Hiroyuki**
**Kobe-shi, Hyogo 650-0021 (JP)**

(74) Representative: **TBK**
**Bavariaring 4-6**
**80336 München (DE)**

(54) **INFORMATION PROCESSING DEVICE, INFORMATION PROCESSING METHOD, AND PROGRAM**

(57)     An information processing apparatus 60 includes an acquirer 64, a corrector 68, a converter 70, and a storer 74. The acquirer 64 acquires foot shape data in a predetermined data format. The corrector 68 detects a predetermined measurement direction defining a foot size from the foot shape data, and corrects the foot shape data such that the measurement direction corresponds to an orientation common to a target data format. The converter 70 converts the data format of the foot shape data into the target data format. The storer 74 stores, as normalized foot shape data, the foot shape data corrected by the corrector 68 and converted by the converter 70.

FIG. 2

**Description**

TECHNICAL FIELD

The present disclosure relates to an information processing apparatus, an information processing method, and a program.

BACKGROUND ART

There is known a technique capable of simply measuring a foot size of a user based on a captured image of the foot of the user (see, for example, Patent Literature 1). According to the technique described in Patent Literature 1, since the user can easily measure his/her foot size, it can be utilized when selecting footwear having a size suitable for the foot of the user. In addition, Patent Literature 1 describes that a three-dimensional model of the foot of the user (foot-type model) can be generated.

RELATED-ART LITERATURE

PATENT LITERATURE

Patent Literature 1: WO 2020/059716 A

SUMMARY OF INVENTION

TECHNICAL PROBLEM

There are various data formats for data of the foot-type model (hereinafter, referred to as "foot shape data") according to the technique described in Patent Literature 1 or the like. In addition, the orientation of the foot defined in the foot shape data varies depending on a difference in a foot shape measuring method or the like. Therefore, it is difficult to collectively process a plurality of pieces of foot shape data or to compare the foot shape data with each other.
The present disclosure has been made in view of such a situation, and an object of the present disclosure is to provide a technique capable of improving the ease of handling of foot shape data.

SOLUTION TO PROBLEM

An information processing apparatus according to one aspect of the present disclosure includes: an acquirer structured to acquire foot shape data in a predetermined data format; a corrector structured to detect a predetermined measurement direction defining a foot size from the foot shape data and correct the foot shape data such that the measurement direction corresponds to an orientation common to a target data format; a converter structured to convert the data format of the foot shape data into the target data format; and a storer structured to store, as normalized foot shape data, the foot shape data corrected by the corrector and converted by the converter.
Another aspect of the present disclosure is an information processing method. This method includes: a process of acquiring foot shape data in a predetermined data format; a process of detecting a predetermined measurement direction defining a foot size from the foot shape data, and correcting the foot shape data such that the measurement direction corresponds to an orientation common to a target data format; a process of converting the data format of the foot shape data into the target data format; and a process of storing the corrected and converted foot shape data as normalized foot shape data.
Another aspect of the present disclosure is a program. This program causes a computer to realize: a function of acquiring foot shape data in a predetermined data format; a function of detecting a predetermined measurement direction defining a foot size from the foot shape data, and correcting the foot shape data such that the measurement direction corresponds to an orientation common to a target data format; a function of converting the data format of the foot shape data into the target data format; and a function of storing the corrected and converted foot shape data as normalized foot shape data.
Note that arbitrary combinations of the above components and mutual replacement of the components and expressions of the present disclosure between a method, an apparatus, a program, a temporary or non-temporary storage medium storing a program, a system, and the like are also effective as aspects of the present disclosure.

ADVANTAGEOUS EFFECTS OF INVENTION

According to one aspect of the present disclosure, it is possible to provide a technique capable of improving the ease of handling of foot shape data.

BRIEF DESCRIPTION OF DRAWINGS

[Fig. 1] Fig. 1 is a schematic diagram illustrating an outline of an information processing system.
[Fig. 2] Fig. 2 is a functional block diagram illustrating a schematic configuration of the information processing system illustrated in Fig. 1.
[Fig. 3] Fig. 3 is a functional block diagram illustrating a schematic configuration of a converter illustrated in Fig. 2.
[Fig. 4] Fig. 4 is a diagram schematically illustrating a contour line of foot shape data viewed from directly above.
[Fig. 5] Fig. 5 is a diagram schematically illustrating a three-dimensional homology model.
[Fig. 6] Fig. 6 is a block diagram illustrating a configuration example of the information processing system illustrated in Fig. 1.
[Fig. 7] Fig. 7 is a flowchart illustrating an example of processing of an information processing apparatus illustrated in Fig. 1.

DESCRIPTION OF EMBODIMENTS

Hereinafter, the present disclosure will be described based on a preferred embodiment with reference to the drawings. In the embodiment and modifications, the same or equivalent components are denoted by the same reference numerals, and redundant description is appropriately omitted.

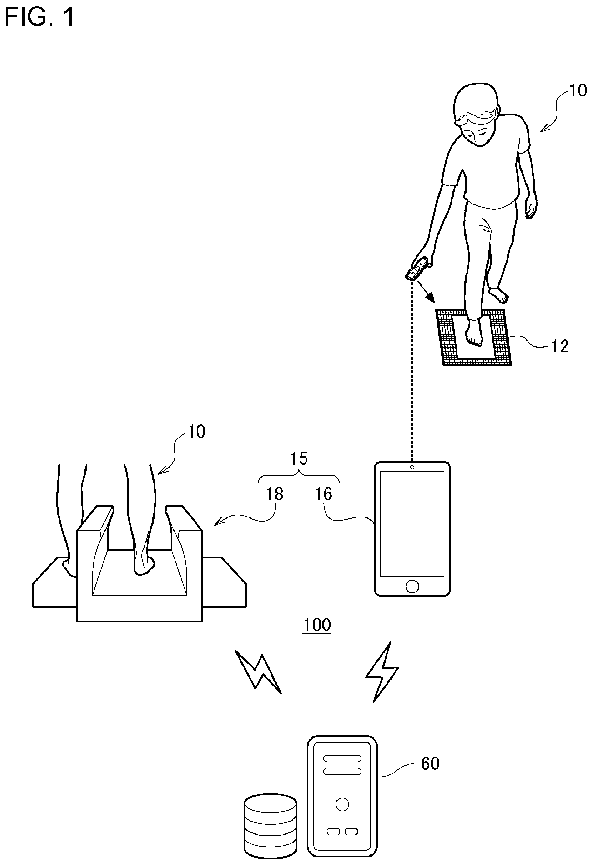

Fig. 1 is a schematic diagram illustrating an outline of an information processing system 100. The information processing system 100 includes a measuring instrument 15 such as a three-dimensional foot shape measuring device 18 and an information terminal 16, and an information processing apparatus 60. The three-dimensional foot shape measuring device 18 as the measuring instrument 15 scans a foot shape of a user 10. Only one of the three-dimensional foot shape measuring device 18 and the information terminal 16 may be used, or both may be used in combination. The information terminal 16 as the measuring instrument 15 is, for example, a mobile phone terminal, and captures an image of a foot of the user 10 with a built-in camera. The user 10 may operate the measuring instrument 15 to capture the image of his/her foot, or a person other than the user 10, for example, a clerk of a shoe shop may operate the measuring instrument 15 to capture the image of the foot of the user 10. Alternatively, the measuring instrument 15 may automatically capture the image of the foot of the user 10.

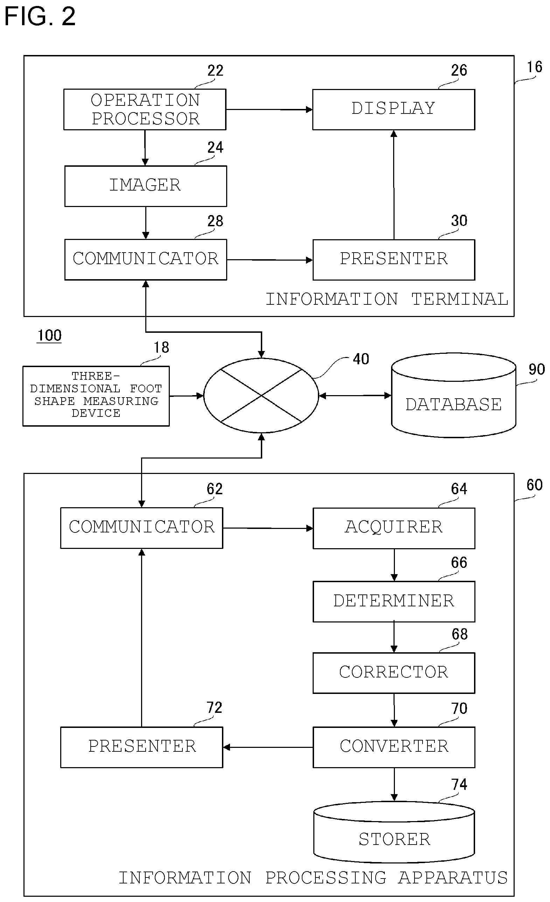

The three-dimensional foot shape measuring device 18 acquires foot shape data of the user 10 by laser measurement. In the present specification, the "foot shape data" includes point cloud data in a three-dimensional coordinate system. The three-dimensional foot shape measuring device 18 transmits the foot shape data to the information processing apparatus 60. The three-dimensional foot shape measuring device 18 may transmit the foot shape data to a database 90 illustrated in Fig. 2.

The information terminal 16 may capture the image of the foot of the user 10 such that a predetermined reference object is reflected. Here, the "reference object" is a comparison target for measuring the foot length and the foot width of the foot of the user 10 based on the image, and is a planar or three-dimensional object whose size and shape are specified in advance. The "reference object" may be a general-purpose product or a dedicated product as long as the size and shape of the reference object are specified. As the general-purpose product, for example, paper of a prescribed size such as A4 size (210 mm × 297 mm) or letter size can be used. The color of the paper is preferably white, but may be other colors. In this case, the user 10 may place his/her foot on the A4 paper and capture an image of his/her foot using the information terminal 16. As the dedicated product, a measurement mat 12 illustrated in Fig. 1 can be used. In this case, the user 10 may place his/her foot on the measurement mat 12 and capture the image of his/her foot using the information terminal 16. Regardless of whether the general-purpose product or the dedicated product is used as the reference object, a person other than the user 10 may capture the image of the foot of the user 10 using the information terminal 16. The information terminal 16 may capture the image of the foot of the user 10 without using the reference object.

The information terminal 16 may acquire a plurality of images by capturing the image of the foot of the user 10 from a plurality of angles. As a result, an image in which the contours of the tiptoe and the heel and the contours of the left and right sides from the forefoot to the middle foot are reflected is obtained, so that information on the foot length and the foot width can be included in the image. The information terminal 16 may acquire at least one image of the foot of the user 10 captured from above in a state where a portion such as the heel of the foot of the user 10 is aligned with a predetermined place of the reference object. As a result, even if the portion such as the heel is not directly reflected in the image, the position of the portion such as the heel in the image can be specified, so that the information on the foot length and the foot width can be included in the image.

As described above, the information terminal 16 acquires the image of the foot shape (hereinafter, referred to as a "foot image") of the user 10 by capturing the image of the foot of the user 10. The foot image may be a plurality of images or a single image. In addition, the foot image may be a moving image based on a plurality of images acquired in chronological order. The information terminal 16 may generate the foot shape data based on the foot image. The information terminal 16 transmits at least one of the foot image and the foot shape data to the information processing apparatus 60. In a case where the information terminal 16 transmits the foot image to the information processing apparatus 60, the information processing apparatus 60 generates the foot shape data based on the received foot image. In the following description, it is assumed that the information terminal 16 transmits the foot shape data to the information processing apparatus 60.

In a case where the information terminal 16 has a three-dimensional scanner function using a technology such as light detection and ranging (LiDAR), the foot shape data may be directly acquired by scanning the periphery of the foot. Even when the information terminal 16 does not have the three-dimensional scanner function using LiDAR or the like, the foot shape data may be acquired by image composition processing such as photogrammetry. In these cases, the information terminal 16 transmits the foot shape data to the information processing apparatus 60. Similarly to the three-dimensional foot shape measuring device 18, the information terminal 16 may transmit the foot shape data to the database 90 illustrated in Fig. 2.

The information processing apparatus 60 is, for example, a server computer connected to a plurality of the three-dimensional foot shape measuring devices 18 and a plurality of the information terminals 16 via a network line such as the Internet or a local area network (LAN) and a means of communication such as wireless communication. In a case where the information processing apparatus 60 is the server computer, the information processing apparatus 60 may be configured by a single server computer or may be configured by a combination of a plurality of server computers.

Each of the information terminal 16 and the information processing apparatus 60 may be configured by a portable terminal or a computer including a central processing unit (CPU), a graphics processing unit (GPU), a random access memory (RAM), a read only memory (ROM), an auxiliary storage device, a display device, a communication device, and the like, and a program stored in the portable terminal or the computer. For example, a program executed on the information processing apparatus 60 side may be used from the information terminal 16 side via a means of communication. However, a single device having the functions of the information terminal 16 and the information processing apparatus 60 may realize the function of the information processing system 100, and the single device may execute the program. The single device may be a personal computer, a portable terminal such as a smartphone, or a tablet terminal capable of executing the program. Alternatively, the single device may be a terminal installed in a shoe shop and capable of executing the program.

The "information processing apparatus" referred to in the claims may refer to the entire information processing system 100 or may refer to the information processing apparatus 60. In the embodiment, since the information processing apparatus 60 realizes many of the distinctive functions included in the "information processing apparatus" referred to in the claims, the information processing apparatus 60 substantially corresponds to the "information processing apparatus".

Fig. 2 is a functional block diagram illustrating a schematic configuration of the information processing system 100. As illustrated in Fig. 2, the information processing system 100 may further include the database 90. The functional blocks illustrated in the drawings including Fig. 2 can be realized by an element or a mechanical device such as a processor or a memory of a computer in terms of hardware, and are realized by a computer program or the like in terms of software, but here, functional blocks realized by cooperation thereof are illustrated. These functional blocks can be realized in various forms by hardware, software, or a combination thereof.

The three-dimensional foot shape measuring device 18, the information terminal 16, the information processing apparatus 60, and the database 90 are connected to each other via a network 40. The information terminal 16 includes an operation processor 22, an imager 24, a display 26, a communicator 28, and a presenter 30.

The operation processor 22 receives an operation input of the user 10. The operation processor 22 receives an instruction from the user 10 regarding the start of a series of programs. The display 26 starts screen display of contents of the foot shape measurement program and displays contents related to a measurement procedure based on the instruction received by the operation processor 22. The operation processor 22 and the display 26 may be configured by, for example, a touch panel in terms of hardware.

The imager 24 captures an image of the foot of the user 10 to acquire the foot image based on the instruction received by the operation processor 22. The imager 24 may be configured by, for example, a camera module in terms of hardware. The communicator 28 transmits at least one of the foot image and the foot shape data and other data to the information processing apparatus 60 via the network 40. The communicator 28 receives data such as normalized foot shape data from the information processing apparatus 60. The normalized foot shape data will be described later. The communicator 28 may be configured by, for example, a wireless communication module such as wireless LAN communication or mobile phone communication in terms of hardware.

The presenter 30 visualizes the normalized foot shape data received from the information processing apparatus 60 and presents the normalized foot shape data to the user 10 through screen display by the display 26. The presenter 30 may have a function equivalent to that of a presenter 72 of the information processing apparatus 60 described later. In addition, at least one of the functions of these "presenters" may be realized only by the information terminal 16 or only by the information processing apparatus 60, or may be realized by cooperation between the information terminal 16 and the information processing apparatus 60. That is, after the information terminal 16 receives the normalized foot shape data, the presenter 30 of the information terminal 16 may convert the normalized foot shape data into the display data and perform visualization processing, or after the presenter 72 of the information processing apparatus 60 converts the normalized foot shape data into the display data and performs the visualization processing, the display data after conversion may be transmitted to the information terminal 16.

The information processing apparatus 60 includes a communicator 62, an acquirer 64, a determiner 66, a corrector 68, a converter 70, a storer 74, and the presenter 72. The communicator 62 receives the foot shape data from the three-dimensional foot shape measuring device 18 or the information terminal 16, and transmits data such as the normalized foot shape data to the three-dimensional foot shape measuring device 18 or the information terminal 16. The communicator 62 may receive the foot shape data stored in the database 90, and may transmit data such as the normalized foot shape data to the database 90. The communicator 62 may be configured by, for example, a communication module such as a wired LAN in terms of hardware.

The acquirer 64 acquires the foot shape data. The foot shape data acquired by the acquirer 64 has a predetermined data format. The foot shape data has different data formats according to types, and the data format of the foot shape data acquired by the acquirer 64 is any data format of the plurality of data formats. The foot shape data in any data format includes point cloud data in a three-dimensional coordinate system. Specifically, the foot shape data may be data including only a point cloud, or may be data including a point cloud and a line connecting the point clouds. The point cloud included in the foot shape data is mainly arranged at a position constituting the contour of the foot.

Examples of the difference in data format depending on the type of foot shape data include a difference in the arrangement and number of pieces of point cloud data. For example, there are a data format in which the point cloud is arranged at regular intervals along a foot length direction of the foot shape data, a data format in which the point cloud is arranged at irregular intervals, a data format in which the point cloud is arranged according to a predetermined condition such as an anatomical feature, and the like. In addition, the difference in data format depending on the type of foot shape data may be caused by a difference in a measurement condition, a measurement method, or the like when the foot shape data is acquired, and is likely to appear as a difference in a file name extension. The foot shape data in different data formats may be used depending on applications. In addition, the foot shape data may be managed in different databases for each data format.

The orientations of the feet included in the foot shape data are not necessarily unified. That is, the acquirer 64 can acquire the foot shape data including the feet in various orientations each time the foot shape data is acquired. The orientation of the foot included in the foot shape data may be determined according to the data format of the foot shape data, or may be irrelevant to the data format of the foot shape data. That is, the orientation of the foot included in the foot shape data may vary even when the foot shape data has the same data format.

When the foot shape data acquired by the acquirer 64 is based on the foot of the user 10, the foot shape data may be associated with identification information of the user 10. The identification information of the user 10 is information that can identify the user 10 from other users, and may be, for example, account information or the like used in a management service of the foot shape data to be described later. Whether or not to associate the foot shape data with the identification information of the user 10 may be selectable, and for example, the user 10 may select whether or not to associate the foot shape data with the identification information of the user 10 via the information terminal 16.

The determiner 66 determines whether or not the data format of the foot shape data acquired by the acquirer 64 is the same as a target data format. The target data format is a data format obtained by conversion by the converter 70 to be described later in order to unify the data format of the foot shape data. In addition, the determiner 66 determines whether or not a predetermined measurement direction detected from the foot shape data corresponds to an orientation common to the target data format. The predetermined measurement direction will be described later. Note that the determination by the determiner 66 is not essential processing.

The corrector 68 detects the predetermined measurement direction defining the foot size from the foot shape data. The corrector 68 corrects the foot shape data such that the measurement direction corresponds to the orientation common to the target data format. The corrector 68 may execute the above-described correction processing when the determiner 66 determines that the measurement direction does not correspond to the orientation common to the target data format. The "measurement direction" may be any direction used for measuring the foot size, and includes, for example, a foot length direction, a foot width direction, a foot height direction, and the like. As described above, the orientation of the foot included in the foot shape data may vary even when the foot shape data has the same data format. Therefore, the corrector 68 performs correction such that the orientation of the foot included in the corrected foot shape data becomes a certain constant orientation. In the present specification, this orientation is referred to as an "orientation common to the target data format". Note that the measurement direction may be defined according to the target data format.

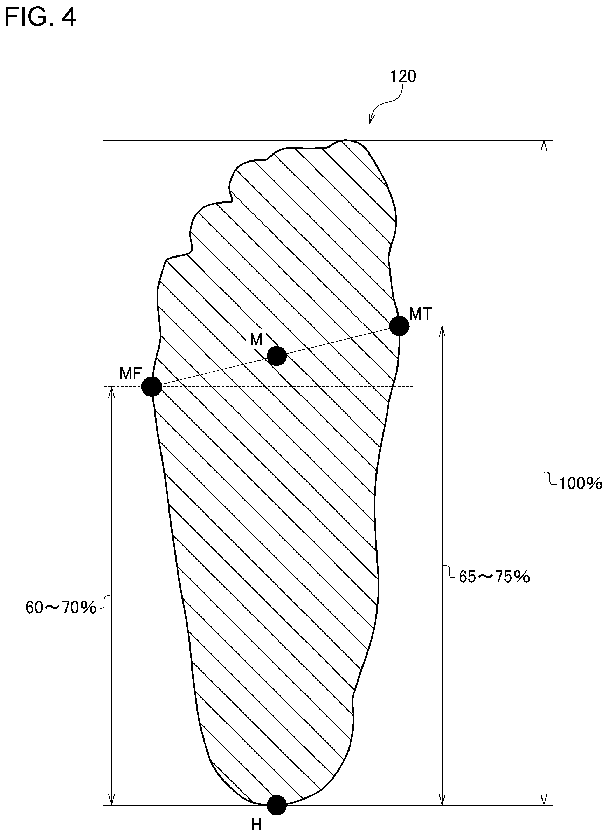

The corrector 68 may detect the measurement direction by any known method. For example, the corrector 68 detects the foot length direction as the measurement direction by the following method. Fig. 4 is a diagram schematically illustrating a contour line of foot shape data 120 viewed from directly above. First, as illustrated in Fig. 4, the corrector 68 extracts the contour line of the foot shape data 120 viewed from directly above. Thereafter, the corrector 68 obtains a midpoint M between a lateral point MF of the contour at a position of 60 to 70% from a heel point H, which is the rearmost end of the heel, and a medial point MT of the contour at a position of 65 to 75% from the heel point H in a range of the maximum value and the minimum value in a vertical axis direction of a coordinate system of the foot shape data 120. Then, the corrector 68 detects a straight line connecting the heel point H and the midpoint M as the long axis of the foot, and detects a direction along the long axis as the foot length direction.

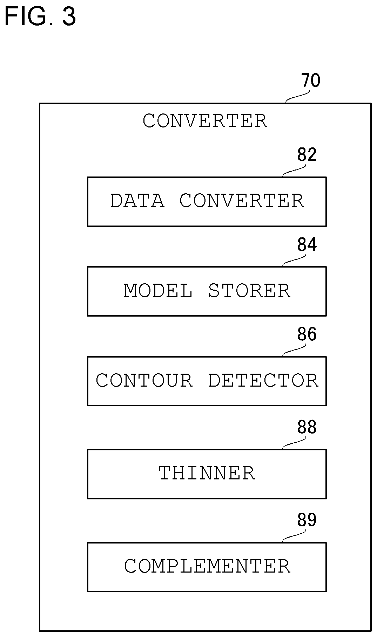

Fig. 3 is a functional block diagram illustrating a schematic configuration of the converter 70. The converter 70 includes a data converter 82. The data converter 82 converts the data format of the foot shape data into the target data format. When the determiner 66 determines that the data format of the foot shape data is not the same as the target data format, the data converter 82 may convert the data format into the target data format.

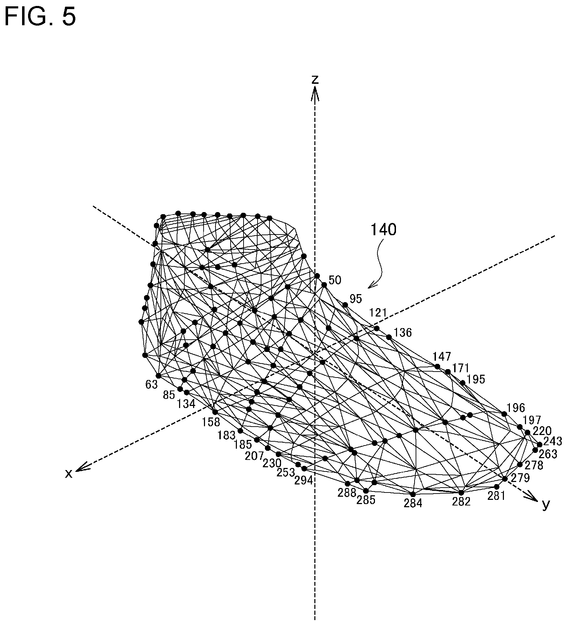

The converter 70 may further include a model storer 84. The model storer 84 stores in advance a three-dimensional coordinate group indicating an anatomical feature of the foot as a three-dimensional homology model. Fig. 5 is a diagram schematically illustrating a three-dimensional homology model 140. The three-dimensional homology model 140 is a model that defines a coordinate group indicating an anatomical feature of an average foot in a three-dimensional space. The coordinate group indicating the anatomical feature of the average foot is obtained in advance based on foot samples obtained from a number of subjects. In the three-dimensional homology model 140, a predetermined number, for example, 295 contour points are defined. The three-dimensional homology model 140 illustrated in Fig. 5 includes 295 contour points and lines connecting the contour points. As illustrated in Fig. 5, each contour point is assigned an ID with a unique number (range of 1 to 295).

The converter 70 performs data conversion as follows, for example. First, the converter 70 detects the anatomical feature of the foot from the foot shape data before conversion. For example, the converter 70 detects a coordinate group indicating the anatomical feature of the foot among three-dimensional coordinate groups indicated by the point cloud data of the foot shape data before conversion. Alternatively, as illustrated in Fig. 3, the converter 70 may further include a contour detector 86. Then, the contour detector 86 detects the contour of the foot from the foot shape data before conversion. The contour detector 86 may detect the contour of the foot from the point cloud included in the foot shape data, or in a case where the foot shape data includes the line connecting the point clouds, the contour detector 86 may detect the contour of the foot using information of the line. The contour detector 86 may detect a position indicating the anatomical feature of the foot or a point cloud closest to the position among the point clouds included in the foot shape data before conversion.

Next, the converter 70 aligns the three-dimensional coordinate group of the three-dimensional homology model 140 stored in the model storer 84 with the foot shape defined in the foot shape data before conversion based on the anatomical feature of the foot shape data before conversion. For example, the converter 70 brings the three-dimensional coordinate group of the three-dimensional homology model 140 close to the coordinate group indicating the anatomical feature of the foot detected from the foot shape data before conversion. Alternatively, the data converter 82 moves the contour of the three-dimensional homology model toward the contour of the foot shape data to a position where the sum of positional differences between the three-dimensional coordinate group of the three-dimensional homology model 140 and the detection points included in the contour of the foot shape data is minimized. In this manner, the data converter 82 brings the three-dimensional homology model close to the contour of the foot shape data. The positional difference between the contour point of the three-dimensional homology model 140 and the detection point of the contour of the foot shape data is expressed by, for example, Expression (1) below.

$$\text{Sum of positional differences} = \Sigma\{Wi \text{ (detection point } j \text{ - contour point } i)\} \cdots \text{Expression (1)} \qquad \text{Expression (1)}$$

$Wi$ = weight, $1 \leq i \leq 295$, $1 \leq j \leq$ maximum value of number of detection points

The data converter 82 brings the three-dimensional homology model 140 close to the contour of the foot shape data by deforming the three-dimensional homology model 140 such that the positional difference calculated by Expression (1) above is minimized. In this manner, the data converter 82 converts the data format of the foot shape data into the target data format. The number of contour points of the three-dimensional homology model 140 is not limited to 295 points. The number of contour points of the three-dimensional homology model 140 may be set according to purposes because the larger the number of contour points is, the more the reproduction accuracy of the foot shape is improved while the data capacity is increased, and the smaller the number of contour points is, the more the reproduction accuracy of the foot shape is reduced while the data capacity is reduced.

The converter 70 may convert the data format of the foot shape data into the target data format using a model other than the three-dimensional homology model 140. In this case, the model storer 84 may store in advance a predetermined number of pieces of point cloud data used in the target data format. The converter 70 may further include a thinner 88 and a complementer 89. In a case where the number of pieces of point cloud data included in the foot shape data before conversion is larger than the number of pieces of point cloud data used in the target data format, the thinner 88 executes thinning processing on the point cloud data included in the foot shape data before conversion. The thinning processing is processing for reducing the number of pieces of point cloud data by deleting some point clouds. When the thinner 88 executes the thinning processing on the point cloud data included in the foot shape data before conversion, effects such as reduction in processing time, reduction in data capacity, and reduction in display and reading time due to reduction in the amount of calculation associated with the conversion processing can be obtained. Note that the thinner 88 may not perform the thinning processing on the coordinate group indicating the anatomical feature among the three-dimensional coordinate groups indicated by the point cloud data of the foot shape data before conversion. As a result, the converter 70 can appropriately perform conversion using the three-dimensional homology model 140.

Conversely, in a case where the number of pieces of point cloud data included in the foot shape data before conversion is smaller than the number of pieces of point cloud data used in the target data format, the complementer 89 executes complement processing on the point cloud data included in the foot shape data before conversion. The complement processing is processing for increasing the number of pieces of point cloud data by adding another point cloud to a position on a line connecting the point clouds or the like. In this manner, the converter 70 may execute at least one of the thinning processing and the complement processing on the point cloud data included in the foot shape data before conversion such that the number of pieces of point cloud data included in the foot shape data before conversion is the number of pieces of point cloud data to be used in the target data format.

The converter 70 may execute the following preprocessing before the data conversion by the data converter 82. For example, the contour detector 86 detects the contour of the foot based on the point cloud data included in the foot shape data before conversion. The data converter 82 converts the data format of the foot shape data into the target data format using the point cloud data located at a distance equal to or less than a predetermined threshold from the detected contour. That is, the data converter 82 excludes the point cloud data separated from the detected contour by exceeding the predetermined threshold from a target to be converted into the target data format. As a result, noise can be reduced.

In addition, for example, the thinner 88 performs thinning processing on the point cloud data included in the foot shape data before conversion. The data converter 82 converts the data format of the foot shape data into the target data format using the point cloud data after the thinning processing. As a result, the amount of calculation associated with the conversion processing can be reduced. Note that when the number of pieces of point cloud data of the foot shape data before conversion is sufficiently larger than the number of pieces of point cloud data in the target data format, a large difference is less likely to occur in the data after conversion even if the thinning processing is performed as the preprocessing.

Returning to Fig. 2, the storer 74 stores, as normalized foot shape data, the foot shape data acquired by the acquirer 64, determined by the determiner 66, and processed by the corrector 68 and the converter 70 according to the determination result. That is, in the normalized foot shape data, the measurement direction corresponds to the orientation common to the target data format, and the data format is the target data format. As described above, the foot shape data is stored in the storer 74 as normalized data in which the orientation and the data format are unified. As described above, the normalized foot shape data includes the point cloud data in the three-dimensional coordinate system.

The storer 74 may store the normalized foot shape data in association with at least one piece of information of the foot length, the foot width, and the foot height defined in the foot shape data before conversion. As a result, simple information regarding the size of the foot included in the foot shape data can be stored together with the normalized foot shape data. In addition, the storer 74 may store, as normalized data, at least one piece of information of the foot length, the foot width, and the foot height defined in the foot shape data before conversion. That is, the storer 74 may not necessarily store these pieces of information in association with the normalized foot shape data. In addition, the normalized data may be, for example, shape information of a predetermined portion of the foot shape included in the foot shape data. The shape information is, for example, toe information that defines the appearance of a toe region. The toe region is not limited to the region of the toe itself such as the first toe to the fifth toe, and may be a region on the heel side, for example, a region including up to the MP joint. The toe information includes information on at least one of a toe width, a toe length, a toe orientation, a nail shape, an appearance shape of the toe, an interval between the toes, and an appearance shape around an MP joint. The information stored in the storer 74 may be stored in the external database 90.

In a case where the foot shape data acquired by the acquirer 64 is associated with the identification information of the user 10, the storer 74 may store the normalized foot shape data in association with the identification information of the user 10. As a result, it is easy to manage the normalized foot shape data for each user 10. In addition, it is easy to cooperate with the management service of the foot shape data used by the user 10. Further, in a case where the target data format is a data format in which the data size can be made smaller than that of the foot shape data before conversion, the storage capacity for the normalized foot shape data can be reduced.

The presenter 72 visualizes the normalized foot shape data, and transmits the normalized foot shape data to the information terminal 16 via the communicator 62 to present the normalized foot shape data to the user 10. When visualizing the normalized foot shape data, the presenter 72 may appropriately perform complement processing for display to obtain a smooth display mode.

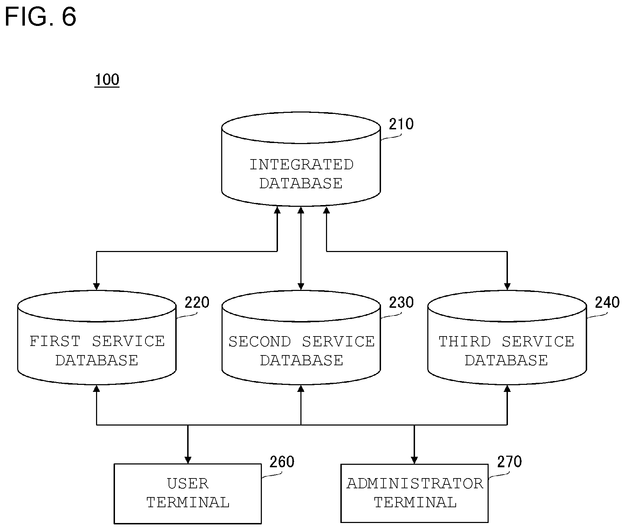

Fig. 6 is a block diagram illustrating a configuration example of the information processing system 100. The information processing system 100 includes an integrated database 210, a first service database 220, a second service database 230, a third service database 240, a user terminal 260, and an administrator terminal 270. The integrated database 210 is a database server mainly having the function of the information processing apparatus 60. The user terminal 260 and the administrator terminal 270 mainly have the function of the information terminal 16. Although Fig. 6 illustrates the first to third service databases 220 to 240, the number of these is not limited to three, and may be two or four or more.

The user terminal 260 is a terminal mainly used by a person who provides his/her foot shape data, such as the user 10. The first to third service databases 220 to 240 are database servers for performing management services of different foot shape data. The administrator terminal 270 is a terminal used by a person who manages and operates the first to third service databases 220 to 240, a researcher, or the like.

The user terminal 260 is connected to each of the first to third service databases 220 to 240 via a network or the like, and transmits foot shape data to one of the first to third service databases 220 to 240 according to a service to be used. The first to third service databases 220 to 240 have different data formats of foot shape data to be stored. The administrator terminal 270 is connected to each of the first to third service databases 220 to 240 via a network or the like, and accesses the first to third service databases 220 to 240 according to a form of a service to be provided.

The integrated database 210 is connected to each of the first to third service databases 220 to 240 via a network or the like, converts the foot shape data stored in each of the first to third service databases 220 to 240, and stores the converted foot shape data as normalized foot shape data. In addition, the integrated database 210 stores the normalized foot shape data in association with the foot shape data as a conversion source stored in each of the first to third service databases 220 to 240.

The user terminal 260 and the administrator terminal 270 are connected to the integrated database 210 via a network or the like, and access the normalized foot shape data stored in the integrated database 210 as necessary. In addition, the user terminal 260 and the administrator terminal 270 access as necessary the foot shape data as the conversion source stored in each of the first to third service databases 220 to 240 associated with the normalized foot shape data.

As described above, even in a case where the foot shape data in different data formats is managed in a plurality of services, the information processing system 100 can improve convenience by linking the database server used for each service. In addition, the information processing system 100 can use the normalized foot shape data in which the data format and the orientation of the foot are unified while taking advantage of the quality of each service. In addition, by unifying the data format and the orientation of the foot by the normalized foot shape data, even when, for example, a large amount of normalized foot shape data is accumulated, a researcher or the like can easily perform analysis, and a development period of the service or the product can be shortened. In addition, as compared with the case of using foot shape data in which the data format and the orientation of the foot are not unified, the number of pieces of data that can be analyzed in the same time increases when the normalized foot shape data is used, and thus the reliability of the analysis result is improved. In addition, since the integrated database 210 manages the normalized foot shape data, it is not necessary to individually store and manage the foot shape data in a store or the like, and the man-hour of the clerk can be reduced. Further, with the spread of a unified format of foot shape data such as the normalized foot shape data, the general understanding of parameters used in such a unified format is deepened, and the interpretability for the foot can be improved.

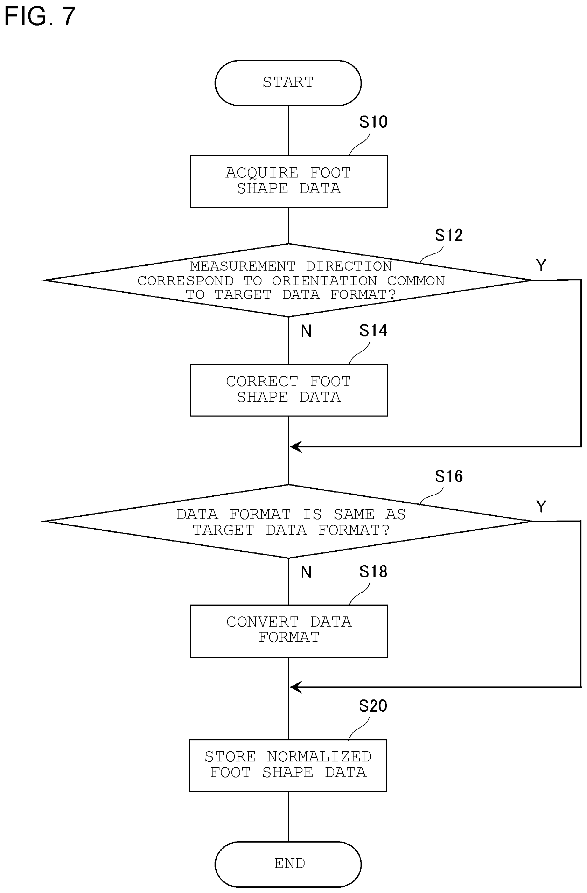

Fig. 7 is a flowchart illustrating an example of processing of the information processing apparatus 60. The acquirer 64 acquires foot shape data (S10). The determiner 66 determines whether or not a predetermined measurement direction detected from the foot shape data corresponds to an orientation common to the target data format (S12). When the determiner 66 determines that the predetermined measurement direction corresponds to the orientation common to the target data format (Y in S12), the processing proceeds to step S16. When the determiner 66 determines that the predetermined measurement direction does not correspond to the orientation common to the target data format (N in S12), the corrector 68 corrects the foot shape data such that the measurement direction of the foot shape data corresponds to the orientation common to the target data format (S14), and the processing proceeds to step S16.

In step S16, the determiner 66 determines whether or not the data format of the foot shape data is the same as the target data format (S16). When the determiner 66 determines that the data format of the foot shape data is the same as the target data format (Y in S16), the processing proceeds to step S20. When the determiner 66 determines that the data format of the foot shape data is not the same as the target data format (N in S16), the converter 70 converts the data format of the foot shape data into the target data format (S18), and the processing proceeds to step S20.

In step S20, the storer 74 stores, as normalized foot shape data, the foot shape data to be processed, and the processing ends. In the above-described processing, the information processing apparatus 60 may execute the processing of step S12 and step S14 after the processing of step S16 and step S18. That is, the order of execution of the correction processing by the corrector 68 and the conversion processing by the converter 70 is not particularly limited.

The above-described embodiment may be a program for causing a computer to realize a function for realizing the above-described method, or may be a recording medium that stores the program. The recording medium storing such a program may be a non-transitory, tangible computer-readable storage medium, a non-volatile memory, a magnetic recording medium such as a magnetic tape or a magnetic disk, or an optical recording medium such as an optical disk.

The embodiment has been described above. It is to be understood by those skilled in the art that the embodiment is an example, various modifications can be made to combinations of the components and the processing processes, and such modifications are also within the scope of the present disclosure. In addition, the following aspects can be obtained by generalizing the above-described embodiment.

[Aspect 1]

An information processing apparatus including:

an acquirer structured to acquire foot shape data in a predetermined data format;
a corrector structured to detect a predetermined measurement direction defining a foot size from the foot shape data and correct the foot shape data such that the measurement direction corresponds to an orientation common to a target data format;
a converter structured to convert the data format of the foot shape data into the target data format; and
a storer structured to store, as normalized foot shape data, the foot shape data corrected by the corrector and converted by the converter.

The information processing apparatus according to the aspect corrects the acquired foot shape data such that the measurement direction corresponds to the orientation common to the target data format, converts the data format into the target data format, and stores the corrected and converted foot shape data as the normalized foot shape data. As a result, according to the aspect, since the normalized foot shape data in which the orientations of foot shapes are aligned and the data format is unified can be obtained, the ease of handling of the foot shape data can be improved. For example, it is possible to obtain effects that it is easy to collectively process a plurality of pieces of foot shape data and it is easy to compare the foot shape data with each other.

[Aspect 2]

The information processing apparatus according to Aspect 1, in which

the predetermined data format may be any data format of a plurality of data formats,
the information processing apparatus may further include a determiner structured to determine whether or not the data format of the foot shape data acquired by the acquirer is the same as the target data format, and
the converter may convert the data format into the target data format when it is determined that the data format of the foot shape data is not the same as the target data format.

According to the aspect, the data format can be efficiently converted for the foot shape data that is not in the same data format as the target data format.

[Aspect 3]

The information processing apparatus according to Aspect 2, in which

the determiner may further determine whether or not the measurement direction detected from the foot shape data corresponds to the orientation common to the target data format, and
the corrector may correct the foot shape data when it is determined that the measurement direction does not correspond to the orientation common to the target data format.

According to the aspect, the measurement direction can be efficiently corrected for the foot shape data in which the measurement direction does not correspond to the orientation common to the target data format.

[Aspect 4]

The information processing apparatus according to any one of Aspects 1 to 3, in which

the foot shape data before conversion acquired by the acquirer and the normalized foot shape data may each include point cloud data in a three-dimensional coordinate system, and

the converter may perform conversion into the target data format by storing in advance, as a three-dimensional homology model, a three-dimensional coordinate group indicating an anatomical feature of a foot, detecting the anatomical feature of the foot from the foot shape data before conversion, and aligning, based on the anatomical feature of the foot shape data before conversion, the three-dimensional coordinate group of the three-dimensional homology model with a foot shape defined in the foot shape data before conversion.

According to the aspect, since the data format of the foot shape data is converted into the target data format using the three-dimensional homology model based on the anatomical feature of the foot, a data format including a contour point in a portion having a relatively high importance in the measurement of various sizes of the foot can be set as the target data format.

[Aspect 5]

The information processing apparatus according to Aspect 4, in which the converter may perform conversion into the target data format by detecting a contour from the foot shape data before conversion, and moving a contour of the three-dimensional homology model toward the detected contour to a position where a sum of positional differences between the three-dimensional coordinate group and coordinate points included in the detected contour is minimized to bring the three-dimensional homology model close to the detected contour.

According to the aspect, the contour of the three-dimensional homology model can be accurately brought close to the contour detected from the foot shape data.

[Aspect 6]

The information processing apparatus according to any one of Aspects 1 to 5, in which

the foot shape data before conversion acquired by the acquirer and the normalized foot shape data may each include point cloud data in a three-dimensional coordinate system, and

the converter may store in advance a predetermined number of pieces of point cloud data to be used in the target data format, and execute at least one of thinning processing and complement processing on the point cloud data included in the foot shape data before conversion such that the number of pieces of the point cloud data included in the foot shape data before conversion is the number of pieces of point cloud data to be used in the target data format.

According to the aspect, even when the number of pieces of point cloud data included in the foot shape data before conversion is different from the number of pieces of point cloud data used in the target data format, the data format can be appropriately converted.

[Aspect 7]

The information processing apparatus according to any one of Aspects 1 to 6, in which the storer may store the normalized foot shape data in association with at least one piece of information of a foot length, a foot width, and a foot height defined in the foot shape data before conversion acquired by the acquirer.

According to the aspect, since the normalized foot shape data is stored in association with the information defining the foot size, the ease of handling of the foot shape data can be further improved.

[Aspect 8]

The information processing apparatus according to any one of Aspects 1 to 7, in which

the foot shape data before conversion acquired by the acquirer may include point cloud data in a three-dimensional coordinate system, and

the converter may detect a contour of a foot based on the point cloud data included in the foot shape data before conversion, and execute the conversion using point cloud data located at a distance equal to or less than a predetermined threshold from the contour.

According to the aspect, since conversion is executed using the point cloud data close to the contour of the foot to some extent among the point cloud data included in the foot shape data before conversion, the normalized foot shape data with reduced noise can be generated.

[Aspect 9]

The information processing apparatus according to any one of Aspects 1 to 8, in which

the foot shape data before conversion acquired by the acquirer may include point cloud data in a three-dimensional coordinate system, and
the converter may perform thinning processing on the point cloud data included in the foot shape data before conversion, and execute the conversion using the point cloud data after the thinning processing.

According to the aspect, since the thinning processing is performed before the data format of the foot shape data is converted, the amount of calculation associated with the conversion processing can be reduced.

[Aspect 10]

The information processing apparatus according to any one of Aspects 1 to 9, in which the storer may store the foot shape data before conversion acquired by the acquirer and the normalized foot shape data in association with each other.
According to the aspect, since the foot shape data before conversion and the foot shape data after conversion can be referred to each other, for example, the foot shape data to be used can be selected according to purposes.

[Aspect 11]

An information processing method including:

a process of acquiring foot shape data in a predetermined data format;
a process of detecting a predetermined measurement direction defining a foot size from the foot shape data, and correcting the foot shape data such that the measurement direction corresponds to an orientation common to a target data format;
a process of converting the data format of the foot shape data into the target data format; and
a process of storing, as normalized foot shape data, the corrected and converted foot shape data.

According to the information processing method according to the aspect, the acquired foot shape data is corrected such that the measurement direction corresponds to the orientation common to the target data format, the data format is converted into the target data format, and the corrected and converted foot shape data is stored as the normalized foot shape data. As a result, according to the aspect, since the normalized foot shape data in which the orientations of foot shapes are aligned and the data format is unified can be obtained, the ease of handling of the foot shape data can be improved. For example, it is easy to collectively process a plurality of pieces of foot shape data, and the foot shape data can be easily compared with each other.

[Aspect 12]

A program for causing a computer to realize:

a function of acquiring foot shape data in a predetermined data format;
a function of detecting a predetermined measurement direction defining a foot size from the foot shape data, and correcting the foot shape data such that the measurement direction corresponds to an orientation common to a target data format;
a function of converting the data format of the foot shape data into the target data format; and
a function of storing, as normalized foot shape data, the corrected and converted foot shape data.

According to the program according to the aspect, the acquired foot shape data is corrected such that the measurement direction corresponds to the orientation common to the target data format, the data format is converted into the target data format, and the corrected and converted foot shape data is stored as the normalized foot shape data. As a result, according to the aspect, since the normalized foot shape data in which the orientations of foot shapes are aligned and the data format is unified can be obtained, the ease of handling of the foot shape data can be improved. For example, it is easy to collectively process a plurality of pieces of foot shape data, and the foot shape data can be easily compared with each other.

INDUSTRIAL APPLICABILITY

The present disclosure relates to an information processing apparatus, an information processing method, and a program.

REFERENCE SIGNS LIST

60 information processing apparatus, 64 acquirer, 66 DETERMINER, 68 corrector, 70 converter, 74 storer, 100 information processing system, 120 foot shape data, 140 three-dimensional homology model

**Claims**

1. An information processing apparatus comprising:

   an acquirer structured to acquire foot shape data in a predetermined data format;
   a corrector structured to detect a predetermined measurement direction defining a foot size from the foot shape data and correct the foot shape data such that the measurement direction corresponds to an orientation common to a target data format;
   a converter structured to convert the data format of the foot shape data into the target data format; and
   a storer structured to store, as normalized foot shape data, the foot shape data corrected by the corrector and converted by the converter.

2. The information processing apparatus according to claim 1, wherein

   the predetermined data format is any data format of a plurality of data formats,
   the information processing apparatus further comprising a determiner structured to determine whether or not the data format of the foot shape data acquired by the acquirer is the same as the target data format,
   wherein the converter converts the data format into the target data format when it is determined that the data format of the foot shape data is not the same as the target data format.

3. The information processing apparatus according to claim 2, wherein

   the determiner further determines whether or not the measurement direction detected from the foot shape data corresponds to the orientation common to the target data format, and
   the corrector corrects the foot shape data when it is determined that the measurement direction does not correspond to the orientation common to the target data format.

4. The information processing apparatus according to any one of claims 1 to 3, wherein

   the foot shape data before conversion acquired by the acquirer and the normalized foot shape data each include point cloud data in a three-dimensional coordinate system, and
   the converter performs conversion into the target data format by storing in advance, as a three-dimensional homology model, a three-dimensional coordinate group indicating an anatomical feature of a foot, detecting the anatomical feature of the foot from the foot shape data before conversion, and aligning, based on the anatomical feature of the foot shape data before conversion, the three-dimensional coordinate group of the three-dimensional homology model with a foot shape defined in the foot shape data before conversion.

5. The information processing apparatus according to claim 4, wherein the converter performs conversion into the target data format by detecting a contour from the foot shape data before conversion, and moving a contour of the three-dimensional homology model toward the detected contour to a position where a sum of positional differences between the three-dimensional coordinate group and coordinate points included in the detected contour is minimized to bring the three-dimensional homology model close to the detected contour.

6. The information processing apparatus according to any one of claims 1 to 5, wherein

the foot shape data before conversion acquired by the acquirer and the normalized foot shape data each include point cloud data in a three-dimensional coordinate system, and

the converter stores in advance a predetermined number of pieces of point cloud data to be used in the target data format, and executes at least one of thinning processing and complement processing on the point cloud data included in the foot shape data before conversion such that the number of pieces of the point cloud data included in the foot shape data before conversion is the number of pieces of point cloud data to be used in the target data format.

7. The information processing apparatus according to any one of claims 1 to 6, wherein the storer stores the normalized foot shape data in association with at least one piece of information of a foot length, a foot width, and a foot height defined in the foot shape data before conversion acquired by the acquirer.

8. The information processing apparatus according to claim 1, wherein

the foot shape data before conversion acquired by the acquirer includes point cloud data in a three-dimensional coordinate system, and

the converter detects a contour of a foot based on the point cloud data included in the foot shape data before conversion, and executes the conversion using point cloud data located at a distance equal to or less than a predetermined threshold from the contour.

9. The information processing apparatus according to any one of claims 1 to 8, wherein

the foot shape data before conversion acquired by the acquirer includes point cloud data in a three-dimensional coordinate system, and

the converter performs thinning processing on the point cloud data included in the foot shape data before conversion, and executes the conversion using the point cloud data after the thinning processing.

10. The information processing apparatus according to any one of claims 1 to 9, wherein the storer stores the foot shape data before conversion acquired by the acquirer and the normalized foot shape data in association with each other.

11. An information processing method comprising:

a process of acquiring foot shape data in a predetermined data format;
a process of detecting a predetermined measurement direction defining a foot size from the foot shape data, and correcting the foot shape data such that the measurement direction corresponds to an orientation common to a target data format;
a process of converting the data format of the foot shape data into the target data format; and
a process of storing, as normalized foot shape data, the corrected and converted foot shape data.

12. A program for causing a computer to realize:

a function of acquiring foot shape data in a predetermined data format;
a function of detecting a predetermined measurement direction defining a foot size from the foot shape data, and correcting the foot shape data such that the measurement direction corresponds to an orientation common to a target data format;
a function of converting the data format of the foot shape data into the target data format; and
a function of storing, as normalized foot shape data, the corrected and converted foot shape data.

FIG. 1

# FIG. 2

INFORMATION TERMINAL (16)

- OPERATION PROCESSOR (22)
- IMAGER (24)
- COMMUNICATOR (28)
- DISPLAY (26)
- PRESENTER (30)

100

- THREE-DIMENSIONAL FOOT SHAPE MEASURING DEVICE (18)
- 40
- DATABASE (90)

INFORMATION PROCESSING APPARATUS (60)

- COMMUNICATOR (62)
- ACQUIRER (64)
- DETERMINER (66)
- CORRECTOR (68)
- CONVERTER (70)
- PRESENTER (72)
- STORER (74)

FIG. 3

70

CONVERTER

82

DATA CONVERTER

84

MODEL STORER

86

CONTOUR DETECTOR

88

THINNER

89

COMPLEMENTER

FIG. 4

120

MT

M

MF

H

100%

65～75%

60～70%

FIG. 5

FIG. 6

<u>100</u>

INTEGRATED DATABASE 210

FIRST SERVICE DATABASE 220

SECOND SERVICE DATABASE 230

THIRD SERVICE DATABASE 240

USER TERMINAL 260

ADMINISTRATOR TERMINAL 270

# FIG. 7

```
                    ┌──────────────┐
                    │    START     │
                    └──────┬───────┘
                           │           S10
                    ┌──────┴───────┐
                    │ ACQUIRE FOOT │
                    │  SHAPE DATA  │
                    └──────┬───────┘
                           │                    S12
              ╱────────────┴────────────╲
             ╱   MEASUREMENT DIRECTION    ╲          Y
            ╱ CORRESPOND TO ORIENTATION COMMON ╲─────────┐
             ╲   TO TARGET DATA FORMAT?   ╱              │
              ╲────────────┬────────────╱               │
                           │ N      S14                  │
                    ┌──────┴───────┐                     │
                    │ CORRECT FOOT │                     │
                    │  SHAPE DATA  │                     │
                    └──────┬───────┘                     │
                           │◄────────────────────────────┘
                           │                    S16
              ╱────────────┴────────────╲
             ╱   DATA FORMAT IS SAME AS   ╲          Y
            ╱      TARGET DATA FORMAT?      ╲─────────┐
             ╲────────────┬────────────────╱         │
                           │ N      S18               │
                    ┌──────┴───────┐                  │
                    │ CONVERT DATA │                  │
                    │    FORMAT    │                  │
                    └──────┬───────┘                  │
                           │◄─────────────────────────┘
                           │    S20
                    ┌──────┴───────────┐
                    │ STORE NORMALIZED │
                    │ FOOT SHAPE DATA  │
                    └──────┬───────────┘
                           │
                    ┌──────┴───────┐
                    │     END      │
                    └──────────────┘
```

## INTERNATIONAL SEARCH REPORT

| International application No. |
|---|
| **PCT/JP2024/032160** |

**A. CLASSIFICATION OF SUBJECT MATTER**

*A43D 1/02*(2006.01)i; *G06T 7/50*(2017.01)i; *G06T 17/00*(2006.01)i
FI:   A43D1/02; G06T17/00; G06T7/50

According to International Patent Classification (IPC) or to both national classification and IPC

**B. FIELDS SEARCHED**

Minimum documentation searched (classification system followed by classification symbols)

A43D1/02; G06T7/50; G06T17/00; A61B5/107

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-189181 A (FLICKFIT INC.) 19 October 2017 (2017-10-19) paragraphs [0011]-[0100], fig. 1-19 | 1-12 |
| Y | JP 2022-043405 A (ASICS CORP.) 16 March 2022 (2022-03-16) paragraphs [0011]-[0067], fig. 1-12 | 1-12 |
| A | WO 2014/111708 A1 (HOLITION LIMITED) 24 July 2014 (2014-07-24) | 1-12 |
| A | JP 2019-045463 A (KIBERA CO., LTD.) 22 March 2019 (2019-03-22) | 1-12 |
| A | JP 2018-164727 A (RECREATION LAB CO., LTD.) 25 October 2018 (2018-10-25) | 1-12 |
| A | JP 2022-030936 A (OSHIMA SHOJI KK) 18 February 2022 (2022-02-18) | 1-12 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 November 2024** | **26 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/032160**

| Patent document cited in search report | | | Publication date (day/month/year) | Patent family member(s) | | | Publication date (day/month/year) |
|---|---|---|---|---|---|---|---|
| JP | 2017-189181 | A | 19 October 2017 | (Family: none) | | | |
| JP | 2022-043405 | A | 16 March 2022 | US | 2022/0071356 | A1 | |
| | | | | paragraphs [0025]-[0085], fig. 1-12 | | | |
| | | | | EP | 3964098 | A1 | |
| | | | | CN | 114139332 | A | |
| WO | 2014/111708 | A1 | 24 July 2014 | GB | 2509783 | A | |
| JP | 2019-045463 | A | 22 March 2019 | (Family: none) | | | |
| JP | 2018-164727 | A | 25 October 2018 | (Family: none) | | | |
| JP | 2022-030936 | A | 18 February 2022 | US | 2023/0270212 | A1 | |
| | | | | CN | 116209370 | A | |

Form PCT/ISA/210 (patent family annex) (July 2022)

**EP 4 785 821 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020059716 A